(19) Europäisches Patentamt
European Patent Office
Office européen des brevets

(11) EP 2 073 471 A1

(12) EUROPEAN PATENT APPLICATION

(43) Date of publication:
24.06.2009 Bulletin 2009/26

(51) Int Cl.:
H04L 25/03 (2006.01)    H04B 7/06 (2006.01)
H04B 7/04 (2006.01)

(21) Application number: 07123863.8

(22) Date of filing: 20.12.2007

(84) Designated Contracting States:
AT BE BG CH CY CZ DE DK EE ES FI FR GB GR HU IE IS IT LI LT LU LV MC MT NL PL PT RO SE SI SK TR
Designated Extension States:
AL BA HR MK RS

(71) Applicant: Sony Corporation
Tokyo 108-0075 (JP)

(72) Inventors:
• Schneider, Daniel
Sony Deutschland GmbH
70327 Stuttgart (DE)

• Schwager, Andreas
Sony Deutschland GmbH
70327 Stuttgart (DE)
• Stadelmeier, Lothar
Sony Deutschland GmbH
70327 Stuttgart (DE)

(74) Representative: Körber, Martin Hans et al
Mitscherlich & Partner
Sonnenstraße 33
80331 München (DE)

(54) **Improved selection criterion for quantized precoded spatial multiplexing MIMO**

(57) The present invention relates to the fields of precoded spatial multiplexing MIMO communication systems, especially to the subject of selecting precoding matrices. The present invention especially relates to a communication device, a communication method and a software program product. The MIMO communication device according to the present invention comprises a memory for storing a plurality of MIMO precoding matrices realizing the transmission side encoding of an Eigenbeamforming system; a controller for calculating, for each of at least some of the stored precoding matrices, an indicator value of the SNR of at least one decoupled transmission channel based on at least part of the corresponding precoding matrix, and for selecting one of said stored precoding matrices based on said calculated at least one indicator value of the SNR; and a MIMO detector for detecting symbols based on said selected precoding matrix. Because selection of the precoding matrices is based on SNR indicator values, the SNR can be optimized which is resulting in a higher data rate. Moreover, no computationally complex calculation of a SVD is required for the precoding matrix selection according to the present invention.

Fig. 3

EP 2 073 471 A1

**Description**

Field of the invention

The present invention relates to the fields of precoded spatial multiplexing MIMO communication systems, especially, to the subject of selecting precoding matrices. The present invention especially relates to a communication device, a method for operating a communication device and a software program product.

Description of the prior art

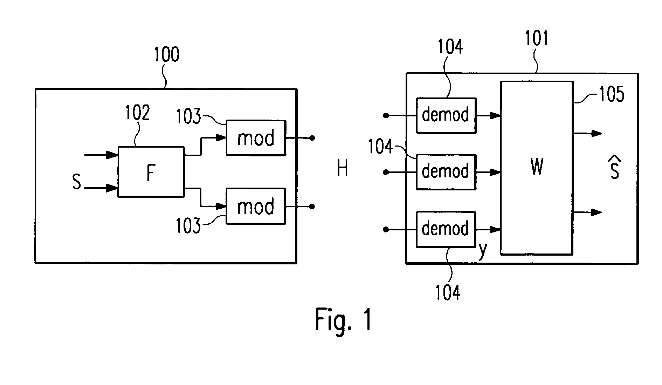

It is known that precoding can improve the performance of MIMO (multiple-input-multiple-output) communication systems. Fig. 1 shows a prior art precoding MIMO communication system comprising a transmitter 100 and a receiver 101. A MIMO communication system has $N>=2$ transmit paths (also called transmit ports) and $M>= 2$ receive paths (also called receive ports). Each transmit port may, for example, correspond to one antenna used for transmission and each receive part may, for example, correspond to one antenna used for receiving. A symbol vector s at the transmitter 100 is multiplied by a MIMO precoding matrix **F** in a precoder 102. The precoded symbol vector **Fs** is then modulated by modulators 103 (one modulator for each transmit path) of the transmitter 100, and transmitted over the communication channel which is described by a channel matrix **H.** The transmitted signal is received by the receiver 101 and is demodulated by the demodulators 104 (one demodulator for each receive path) of the receiver 101. After demodulation, detection is applied to the received symbol vector y by a detector 105. As a result of detection, the estimated symbol vector $\hat{s}$ is obtained (detected). In case of a linear detector, a detection matrix **W** is applied to the received symbol vector y. However, non-linear receivers like, for example, maximum likelihood receivers or other non-linear receivers are possible too.

The optimal linear precoder (providing for an optimal signal-to-noise ratio) is given by

$$\mathbf{F=V} \qquad\qquad\qquad (1)$$

whereby the matrix **V** is related to the channel matrix **H** via the well known singular value decomposition (SVD)

$$\mathbf{H} = \mathbf{U} \quad \mathbf{D} \quad \mathbf{V}^{H} \qquad\qquad (2)$$
$$(M\mathrm{x}N)=(M\mathrm{x}M)(M\mathrm{x}N)(N\mathrm{x}N)$$

where

$$\mathbf{D} = \begin{pmatrix} \sqrt{\lambda_1} & 0 \\ 0 & \sqrt{\lambda_2} \\ 0 & 0 \\ 0 & 0 \end{pmatrix} \qquad\qquad (3)$$

is a diagonal matrix and **U** and **V** are unitary matrices, that is, $\mathbf{U}^{-1}=\mathbf{U}^{H}$ and $\mathbf{V}^{-1}=\mathbf{V}^{H}$, whereby superscript -1 indicates the inverse matrix and superscript H indicates the Hermitian transpose. Of course, equation (3) represents the case $N=2$, $M=4$, generalization to arbitrary $M$ and $N$ is obvious. Precoding with the unitary matrix **V** is referred to as unitary precoding or Eigenbeamforming. The sent symbol vector s can be retrieved by the detection matrix $\mathbf{W}=\mathbf{D}^{-1}\mathbf{U}^{H}$. Application of the matrix **V** in the precoder 102 and the matrix $\mathbf{U}^{H}$ in the detector 105 decouples the communication channel **H** into two parallel and independent transmission channels since **D** is a diagonal matrix. These channels are called decoupled transmission channels or, simply, decoupled channels. Each decoupled channel is described by a diagonal value of the matrix **D** (singular value). A signal (symbol) that is transmitted on a decoupled channel is multiplied by the corresponding singular value.

The channel state information (the channel matrix **H**) is normally determined by the receiver 101 of the transmitted symbol vector s. Feedback of the optimal precoding matrix **V,** however, is very costly in terms of channel resources. Quantization of the precoding matrix **V** is applied in the state of the art in order to solve this problem. Hereby, the receiver 101 and the transmitter 100 have a codebook where different unitary precoding matrices are stored. A receiver selects one codebook entry with the knowledge about the optimal precoding matrix **V** and transmits the index of the code book entry to the transmitter. If $b$ is the number of feedback bits, than the number of codebook entries may be up to $2^b$. The selected code book entry is the matrix with the shortest distance to the optimal precoding matrix **V.** A distance criterion applied may, for example, be the chordal distance criterion

$$d_{c,k}(\mathbf{V}, \mathbf{V}_k) = \frac{1}{\sqrt{2}} \left\| \mathbf{V}^H \mathbf{V}_k - \mathbf{V}_k{}^H \mathbf{V} \right\|_F \qquad (4)$$

for unitary matrices, whereby V is the optimal precoding matrix, $\mathbf{V}_k$ is a precoding matrix out of the codebook and $\|\cdot\|_F$ is the Frobenius norm of a matrix. The transmitter 100 then selects the precoding matrix with the given index out of its own codebook and applies the corresponding precoding by means of the precoder 102. Employment of the quantized, non-ideal precoding matrices, however, causes a reduction of SNR and a reduced data rate.

Detection in case of a quantized precoding matrix may be performed based on detection in case of spatial multiplexing MIMO without precoding. When the communication channel between the transmitter 100 and the receiver 101 is described by a channel matrix H, the communication channel including the precoding with the precoding matrix $\tilde{\mathbf{V}}$ out of the codebook is described by an equivalent channel matrix

$$\tilde{\mathbf{H}} = \mathbf{H}\tilde{\mathbf{V}} \qquad (5)$$

A detection corresponding to this equivalent channel is easily performed by detection techniques of regular spatial multiplexing MIMO, including for example, Zero Forcing (ZF), Minimum Mean Square Error (MMSE) and Maximum Likelihood (ML) decoders or other suitable techniques.

In case of MIMO-OFDM, the matrix operations described above are performed for each OFDM subcarrier separately.

The problem to be solved by the present invention is to provide for a communication device, a communication method and a corresponding software program product which provide a higher data rate and/or with reduced computational complexity.

Brief description of the present invention

This problem is solved by the MIMO communication device according to claim 1, the method of communication for a MIMO communication system according to claim 9 and the software program product according to claim 17 of the present invention.

The MIMO communication device according to the present invention comprises a memory for storing a plurality of MIMO precoding matrices realizing the transmission side encoding of an Eigenbeamforming system; a controller for calculating, for each of at least some of the stored precoding matrices, an indicator value of the SNR of at least one decoupled transmission channel based on at least part of the corresponding precoding matrix, and for selecting one of said stored precoding matrices based on said calculated at least one indicator value of the SNR; and a MIMO detector for detecting symbols based on said selected precoding matrix.

Because selection of the precoding matrices is based on SNR indicator values, the SNR can be optimized which is resulting in a higher data rate. Moreover, no computationally complex calculation of a SVD is required for the precoding matrix selection according to the present invention. Therefore, the computational complexity is reduced.

Advantageously, said selected precoding matrix is the precoding matrix corresponding to the indicator value of the SNR which indicates the highest SNR.

Alternatively, said controller is adapted to calculate, for each of said at least some of the stored precoding matrices, an average value of said calculated indicator values of the SNR whereby the selected precoding matrix is the precoding matrix corresponding to an extremal value of the calculated average values.

Advantageously, said communication device is an adaptive OFDM communication device and said controller is adapted to determine a modulation scheme of at least one OFDM subcarrier according to channel conditions of the respective subcarrier.

It is advantageous when said MIMO detector is adapted to detect said symbols based on a detection matrix, said detection matrix being based on said selected precoding matrix, each column or row of the detection matrix corresponding to a different decoupled transmission channel; said controller is adapted to calculate at least one row or column of a detection matrix for each of said at least some of the stored precoding matrices, said at least one row or column corresponding to said at least one decoupled transmission channel; and the calculation of said indicator value of the SNR of a decoupled transmission channel is based on the corresponding row or column of the corresponding detection matrix.

Advantageously, said indicator value of the SNR of a decoupled transmission channel is based on or given by a norm of the corresponding row or column of the corresponding detection matrix.

Advantageously, said link controller is adapted to calculate all rows or columns of a detection matrix for each of said at least some of the stored precoding matrices and to calculate corresponding indicator values of the SNR of each of the decoupled transmission channels.

Advantageously, said link controller is adapted to generate and store at least some of said stored precoding matrices based on channel state information.

The method of operating a MIMO communication device having stored a plurality of MIMO precoding matrices realizing the transmission side encoding of an Eigenbeamforming system, according to the present invention comprises steps of calculating, for each of at least some of the stored precoding matrices, an indicator value of the SNR of at least one decoupled transmission channel based on at least part of the corresponding precoding matrix; selecting one of said stored precoding matrices based on the calculated at least one indicator value of the SNR; and detecting symbols based on said selected precoding matrix.

Advantageously, said selected precoding matrix is the precoding matrix corresponding to the indicator value of the SNR which indicates the highest SNR.

Advantageously there is calculated, for each of said at least some of the stored precoding matrices, an average value of said calculated indicator values of the SNR and the selected precoding matrix is the precoding matrix corresponding to an extremal value of the calculated average values.

Advantageously, said MIMO communication system is an adaptive OFDM communication system and the method further comprises a step of determining a modulation scheme of at least one OFDM subcarrier according to channel conditions of the respective subcarrier.

Advantageously, said step of detecting symbols is based on a detection matrix, said detection matrix being based on said selected precoding matrix, each column or row of the detection matrix corresponding to a different decoupled transmission channel; and the method further comprises a step of calculating at least one row or column of a detection matrix for each of said at least some of the stored precoding matrices, said at least one row or column corresponding to said at least one decoupled transmission channel; whereby said step of calculating an indicator value of the SNR of a decoupled transmission channel is based on the corresponding row or column of the corresponding detection matrix.

Advantageously, said indicator value of the SNR of a decoupled transmission channel is based on or given by a norm of the corresponding row or column of the corresponding detection matrix.

Advantageously, all rows or columns of a detection matrix are calculated in said step of calculating at least one row or column of a detection matrix and an indicator value of the SNR is calculated for each of the decoupled transmission channels in said step of calculating an indicator value of the SNR of at least one decoupled transmission channel.

Advantageously, the method comprises a step of generating and storing at least some of said stored precoding matrices based on channel state information.

The software program product according to the present invention is adapted to carry out the communication method according to the present invention when executed by one or more information processing devices.

Brief description of the drawings

Fig. 1 shows a schematic diagram of a Spatial Multiplexing MIMO communication system according to the prior art.

Fig. 2 shows a MIMO communication system comprising embodiments of the MIMO communication device according to the present invention.

Fig. 3 shows a flow diagram corresponding to two embodiments of the method of operating a MIMO communication device according to the present invention.

Description of the preferred embodiments

The general idea of the present invention, which is to select that precoding matrix from the precoding matrix codebook which provides for an optimum signal-to-noise ratio (SNR) - thereby rendering a calculation of a SVD unnecessary and providing improved data transmission performance -, is now explained with reference to specific embodiments of the present invention.

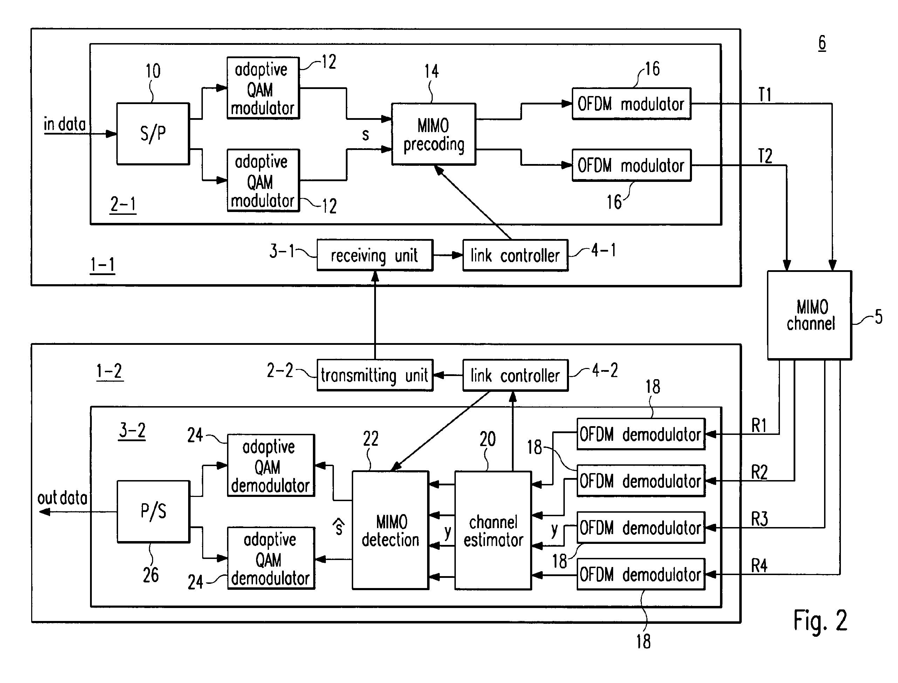

Fig. 2 shows a communication system 6 comprising two communication devices 1-1, 1-2 according to an embodiment of the present invention. The communication device 1-1 comprises a transmitting unit 2-1, a receiving unit 3-1 and a link controller 4-1. The communication device 1-2 comprises a transmitting unit 2-2, a receiving unit 3-1, and a link controller 4-2. The communication devices 1-1 and 1-2 are identical. The communication devices 1-1, 1-2 may both operate as receiver and as transmitter. In the situation depicted in Fig. 2, the device 1-1 is in the role of the transmitter which transmits information (including user data) via the communication channel 5 to the communication device 1-2 which is in the role of the receiver. Because the devices 1-1 and 1-2 are the same, they comprise the same subunits (i.e. the transmitting units 2-1 and 2-2 are identical, the receiving units 3-1 and 3-2 are identical and the link controllers 4-1 and 4-2 are identical). Especially, the receiving unit 3-1 comprises the same subunits as are shown for the receiving unit 3-2 and the transmitting unit 2-2 comprises the same subunits as are shown for the transmitting unit 2-1. All operations the communication device 1-1 is adapted to perform, the communication device 1-2 is also adapted to perform and vice versa. Nevertheless, the communication device 1-2 according to the present invention may, be adapted to operate in the receiver mode only and comprise only the subunits required for operating in the receiver mode. When not referring to a special one of the communication devices 1-1 and 1-2 or to a subunit of the devices 1-1 and 1-2, the suffix "-2" and "-1" used to differentiate between the receiver and the transmitter may be dropped in the following.

The communication device 1 may be any kind of MIMO communication device. It may be a wired (e.g. a PLC modem) or a wireless (e.g. an RF wireless) MIMO communication device. It may be a stationary (e.g. a WLAN base station) or a non-stationary (i.e. portable) (e.g. a mobile phone) communication device.

Now, transmission of data (including user data) from the transmitter 1-1 to the receiver 1-2 is explained.

The transmitting unit 2-1 comprises in the order of signal processing a serial-to-parallel converter (S/P) 10, adaptive QAM modulators 12, a MIMO precoder 14, and OFDM modulators 16. Therefore, the embodiment of the communication device according to the present invention is an adaptive OFDM communication device.

The S/P 10 receives a stream of input data. The input data is given in the form of bits and may comprise user data. The S/P 10 converts the input data to a number $N=>2$ of parallel streams, the number $N$ corresponding to the number of transmit paths T1, T2 and to the number of parallel and independent transmission channels (decoupled channelss) obtained by means of unitary precoding (Eigenbeamforming). In Fig. 2, $N=2$ holds.

Each adaptive QAM modulator 12 (also known as symbol mapper 12) corresponds to one decoupled channel and performs a QAM modulation to the received data stream according to constellation information (constellation diagrams) provided by the link controller 4-1. Each OFDM subcarrier may be assigned a different constellation.

The constellation information for the plurality of OFDM subcarriers is also called an OFDM tonemap. Each adaptive QAM modulator 12 uses a separate tonemap. Each QAM modulator 12 puts out one symbol for each subcarrier. The symbols put out by the plurality of QAM modulators 12 for a given subcarrier form a symbols vector s. The symbol vector s comprises $N$ symbols (is of size N). One symbol vectors s is put out for each subcarrier.

The MIMO precoder 14 precodes the symbol vectors s based on precoding matrices $\tilde{V}$ provided by the link controller 4-1. Hereby, the precoder 14 receives a symbol vector s, applies a linear transformation corresponding to a precoding matrix $\tilde{V}$ to the received symbol vector s and outputs a transformed (precoded) vector of the same size $N$ for each OFDM subcarrier.

The link controller 4-1 has a memory (not shown) with MIMO precoding matrices $\tilde{V}$ stored therein. The set of stored precoding matrices is called the codebook. The precoding matrices may be stored in a form so as to require the least amount of memory. The stored precoding matrixes are indexed. The link controller 4-1 receives the matrix index k of a matrix to use in precoding and the OFDM tonemaps to use for QAM modulation from link the receiver 1-2 via the receiving unit 3-1.

Each OFDM modulator 16 corresponds to one of the transmission paths T1, T2, receives one symbol of the precoded vector and OFDM modulates the received symbol so that it can be transmitted on the corresponding transmit path. Each OFDM modulator 16 may, for example, comprise an IFFT, a DAC and an analogue RF circuit (elements not shown) as is known in the art.

The OFDM modulated symbols (symbol vectors) are transmitted via the MIMO transmission channel 5 to the receiver 1-2. For each OFDM subcarrier, the MIMO channel 5 is described by a separate channel matrix $\mathbf{H}$ of size M x $N$.

The receiving unit 3-2 comprises in the order of signal processing OFDM demodulators 18, a channel estimator 20, a MIMO detector 22, adaptive QAM demodulators 24 and a parallel-to-serial converter (P/S) 26.

Information corresponding to a transmitted OFDM modulated symbol vector is received by the receiver 2-1 on a number $M>=2$ of receive paths R1, R2, R3, R4. In Fig. 2, $M=4$ holds. The received information forms an (OFDM modulated) received symbol vector of size M. Each OFDM demodulator 18 corresponds to one of the receive paths R1, R2, R3, R4, receives one symbol of the (OFDM modulated) received symbol vector and OFDM demodulates the received symbol. The OFDM demodulated symbols of each subcarrier form a received symbol vector y. Each OFDM demodulator 18 may, for example, comprise a FFT, an ADC and an analogue RF circuit (elements not shown) as is known in the art.

The channel estimator 20 is adapted to calculate channel state information (CSI) including a channel matrix H for each OFDM subcarrier. Channel estimation (i.e. calculation of the CSI) is based on signals transmitted from the transmitter 1-1 to the receiver 1-2 via the MIMO channel 5. The channel estimation techniques used may, for example, be based on OFDM training bursts and pilot symbols. Channel estimation, pilot symbols and OFDM training bursts are known in the art in and will not be further described here. The channel estimator 20 provides the CSI to the link controller 4-2.

The link controller 4-2 has a memory (not shown) with MIMO precoding matrices $\tilde{\mathbf{V}}$ stored therein (codebook). The stored precoding matrices are the same as are stored in the link controller 4-1. The stored precoding matrixes are indexed in the same way as the precoding matrices stored in the link controller 4-1. The link controller 4-2 determines the OFDM tonemaps to be used for transmission from the transmitter 1-1 to the receiver 1-2, provides the tonemaps to the adaptive OFDM demodulators 24 and transmits the tonemaps to the transmitter 1-1 via the transmitting unit 2-2. The link controller 4-2 selects the precoding matrix to be used in precoding and provides the corresponding precoding matrix index k to the transmitter 1-1 via the transmitting unit 2-2. Further operation of the link controller 4-2, especially the selection of the precoding matrix, will be explained in more detail later on.

The MIMO detector 22 performs a detection on the received symbol vector y and obtains an estimate $\hat{\mathbf{s}}$ of the symbol vector s for each subcarrier based on the corresponding channel matrix $\mathbf{H}$ and the selected precoding matrix $\tilde{\mathbf{V}}$. Detection is also known as decoding, and the MIMO detector 22 may also be called a MIMO decoder 22. When expressed in terms of decoding, the MIMO decoder 22 decodes the received symbol vector y thereby obtaining the estimate $\hat{\mathbf{s}}$ of the symbol vector s which is comprised in the received symbol vector y in encoded form (s is encoded in y).

When, for example, Zero Forcing (ZF) decoding is applied (other decoding techniques like Minimum Mean Square Error (MMSE) and Maximum Likelihood (ML) are possible too), the detection matrix is the Moore-Penrose pseudo-inverse of the equivalent channel matrix $\tilde{\mathbf{H}}$ defined in equation (7) above:

$$\mathbf{W} = \tilde{\mathbf{H}}_p = \left[\tilde{\mathbf{H}}^H \tilde{\mathbf{H}}\right]^{-1} \tilde{\mathbf{H}}^H \qquad (6)$$

By setting (5) into (6) it follows that

$$\mathbf{W} = \tilde{\mathbf{H}}_p = \tilde{\mathbf{V}}^{-1} \mathbf{H}_p \qquad (7)$$

and, since $\tilde{\mathbf{V}}$ is unitary,

$$\mathbf{W} = \tilde{\mathbf{H}}_p = \tilde{\mathbf{V}}^H \mathbf{H}_p . \qquad (8)$$

Thus, detection is performed by first applying the pseudo-inverse of the channel matrix $\mathbf{H}$ and then applying the Hermitian transpose of the precoding matrix. It is interesting to note that, in case $\mathbf{V} = \tilde{\mathbf{V}}''$, the detection matrix $\tilde{\mathbf{H}}_p$ becomes $\mathbf{D}^{-1}\mathbf{U}^H$ (without proof), which is the decoding matrix for regular Eigenbeamforming.

Each adaptive QAM demodulator 24 (also known as symbol demapper 24) corresponds to one decoupled channel and performs a QAM demodulation to the received symbols according to constellation information (constellation diagrams) provided by the link controller 4-2. The QAM demodulation operation corresponds to the QAM modulation in the corresponding adaptive QAM modulator 12 in the transmitter 1-1. After the adaptive QAM demodulation stage 24, the symbol vector s for each OFDM subcarrier is provided in the form of bits.

The P/S 26 serializes each symbol vector $\hat{\mathbf{s}}$ and provides the serialized symbol vectors $\hat{\mathbf{s}}$ as a single stream of output data. When data transmission is successful, the output data is identical to the input data.

Now, the selection of the precoding matrix is described.

The selection criterion is based on maximizing the SNR after detection. Quantization of the precoding matrix $\tilde{\mathbf{V}}$ means that the precoding matrix is not perfect. Imperfection of the precoding matrix corresponds to an enhancement of noise in the decoding process (which is also the reason for performance degradation of Spatial Multiplexing MIMO without precoding). Assuming ZF detection for example, the estimated symbol vector is

$$\hat{\mathbf{s}} = \mathbf{s} + \mathbf{Wn} , \qquad\qquad (9)$$

whereby n is a noise vector, and the SNR after detection of the *n*-th decoupled transmission channel is

$$\mathrm{SNR_n} = \frac{E}{\left\|\mathbf{w}_n\right\|^2 \sigma^2} , \qquad\qquad (10)$$

whereby E is the average energy of the transmitted symbols, $\sigma^2$ is the variance of the noise, $\mathbf{w}_n$ is the *n*-th row of the detection matrix $\mathbf{W}$ and $\|\cdot\|^2$ is the Euclidean norm of a vector. As one can see, the bigger $\|\mathbf{w}_n\|^2$ is, the lower is the SNR after detection. Therefore, a precoding matrix $\tilde{\mathbf{V}}$ that minimizes $\|\mathbf{w}_n\|^2$ maximizes the SNR after detection. $\|\mathbf{w}_n\|^2$ is an indicator value of the SNR after detection. As a matter of speaking, it might be said that $\|\mathbf{w}_n\|^2$ corresponds to a specific representation of the SNR.

In a first method of precoding matrix selection, an indicator value of the SNR is calculated for each of the decoupled channels and an overall or average value A is calculated based on the indicator values of the SNR for the individual decoupled channels (average over decoupled transmission channels). The overall or average value A may, for example, but not exclusively, be an arithmetic mean, a harmonic mean, a generalized mean, a weighted mean, a weighted harmonic mean and some sort of truncated mean where highest or lowest indicator values are not taken into account. The average should be adapted to the specific form of representation of the SNR. For example, when the indicator values of the SNR are given in the form of equation (9) an arithmetic mean may, but need not, be used and when the indicator values of the SNR is given by $\|\mathbf{w}_n\|^2$ harmonic mean may, but need not, be used.

The first method of selecting a precoding matrix comprises the following steps:

1. Calculate once the pseudo inverse $\mathbf{H}p$ of the channel matrix H. The pseudo inverse is needed for decoding anyway. Therefore no additional computation complexity is caused by this step.

2. Calculate all possible detection matrices $\mathbf{W}_k = \tilde{\mathbf{V}}_k^H \mathbf{H}_p$ , whereby *k*=1, 2, ... *K* is the index of the codebook entries and K is the number of the codebook entries.

3. Calculate $\|\mathbf{w}_{n,k}\|^2$ for all *k* and *n*, whereby *n*= 1, 2, ... *N* is the index of the row of $\mathbf{W}_k$.

4. Calculate an average value $A_k$ (e.g. harmonic mean) of the set of $\|\mathbf{w}_{n,k}\|^2$ (*n*=1, 2, ... *N*) for each precoding matrix index k.

5. Determine the precoding matrix index k corresponding to the maximum of the overall SNR (i.e. the minimum of the overall SNR loss). In other words, determine the precoding matrix index k corresponding to the smallest $A_k$.

The precoding matrix corresponding to the determined precoding matrix index k will then be used for precoding in the MIMO precoder 14 and for decoding/detection in the MIMO detector 22.

In a second method of selecting the precoding matrix, the step of calculating the average or overall value is omitted, which reduces computation complexity still further. Simulations have shown that for communication systems that use adaptive OFDM (i.e. in systems where each OFDM subcarrier is modulated with a constellation that is selected according to the SNR of the subcarrier, as is the case in the present embodiment) it is sufficient to consider only the decoupled channel which provides the strongest SNR.

The second method of selecting the precoding matrix comprises the following steps (steps 1 to 3 are identical to steps 1 to 3 of the first method):

1. Calculate once the pseudo inverse $\mathbf{H}_p$ of the channel matrix $\mathbf{H}$. The pseudo inverse is needed for decoding anyway. Therefore no additional computation complexity is caused by this step.

2. Calculate all possible detection matrices $\mathbf{W}_k = \widetilde{\mathbf{V}}_k^H \mathbf{H}_p$, whereby $k$=1, 2, ... $K$ is the index of the codebook entries and K is the number of the codebook entries.

3. Calculate $\|\mathbf{w}_{n,k}\|^2$ for all $k$ and $n$, whereby $n$= 1, 2, ... $N$ is the index of the row of $\mathbf{W}_k$.

4. Determine the precoding matrix index k which yields the highest SNR. In other words, determine the precoding matrix index k of the smallest of the $\|\mathbf{w}_{n,k}\|^2$.

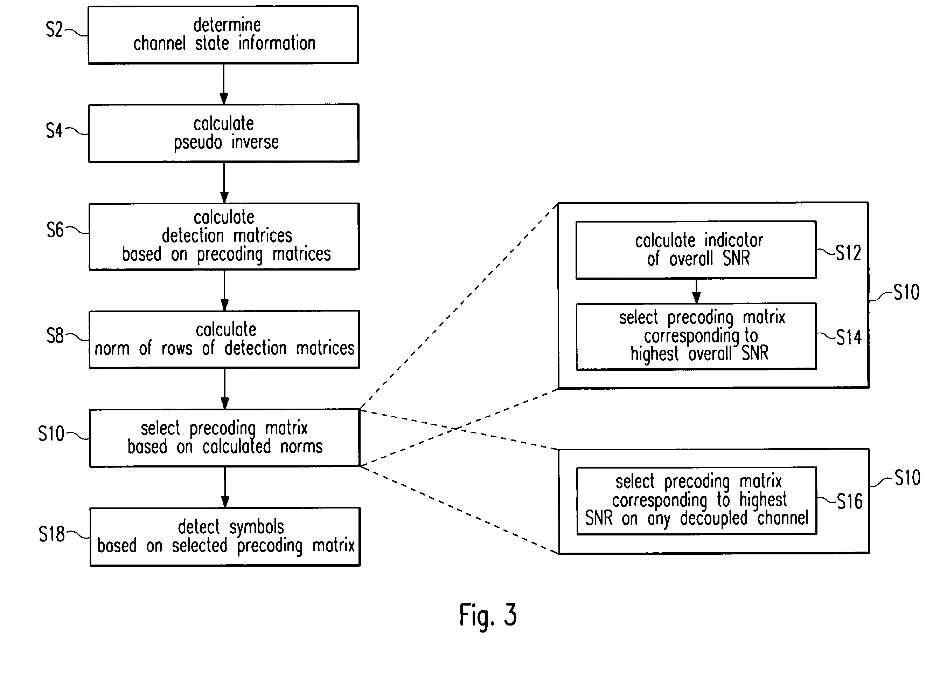

Fig. 3 shows a flow diagram of a first and a second method of operating a MIMO communication device corresponding to the first and the second method of selecting a precoding matrix, respectively. Said first and second method of operating a MIMO communication device correspond to embodiments of the method of operating a MIMO communication device according to the present invention.

In a step S2, channel state information comprising the channel matrix H is determined by the channel estimator 20 for each OFDM subcarrier based on signals received from the transmitter 1-1.

In a step S4, the pseudo inverse $\mathbf{H}_p$ of the channel matrix $\mathbf{H}$ is calculated by the link controller 4-2.

In a step S6, the detection matrices $\mathbf{W}_k = \widetilde{\mathbf{V}}_k^H \mathbf{H}_p$ are calculated by the link controller 4-2.

In a step S8, the Euclidian norm of each row of each detection matrix $\mathbf{W}_k$ is calculated by the link controller 4-2.

In a step S 10, a precoding matrix from the stored precoding matrices is selected based on the calculated norms of the rows of the detection matrices $\mathbf{W}_k$ by the link controller 4-2.

According to the first method, the step S10 comprises steps S12 and S 14.

In the step S12, the average value $A_k$ being indicative of the overall SNR is calculated for each precoding matrix by the link controller 4-2.

In the step S14, the precoding matrix (the precoding matrix index k) corresponding to the lowest value $A_k$ is selected by the link controller 4-2.

According to the second method, the step S10 comprises a step S16.

In the step S16, the precoding matrix (the precoding matrix index k) corresponding to the smallest norm of the rows of the detection matrices $\mathbf{W}_k$ is selected.

After step S10, the method proceeds to step S 18.

In step S 18, the MIMO detector 22 detects symbols based on the detection matrix $\mathbf{W}_k$ which is corresponding to the selected precoding matrix.

Despite having explained methods of precoding matrix selection in which for all prestored encoding matrices an indicator value of the SNR is calculated, this is not necessarily the case. Calculation of an indicator value for only some of the stored precoding matrices may be obtained, for example, by segmenting the space of precoding matrices (the precoding matrices are seen as elements of a corresponding mathematical space). Hereby, the (overall) indicator value may be calculated for one representative member (i.e. precoding matrix) of each segment and the segment corresponding to the "best" (overall) indicator value is selected. Thereafter, a "fine search" is carried out on all elements of the selected segment and the element (i.e. precoding matrix) corresponding to the "best" (overall) indicator value is selected as the precoding matrix used for precoding and detection.

The embodiment of the communication system 6 may be a PLC communication system, for example, a household PLC communication system 6 comprising a first PLC modem 1-1 and a second PLC modem 1-2. Household PLC communication system employing differential signal feeding may use $N$=2 transmit paths T1, T2 and up to $N$=4 receive paths R1, R2, R3, R4 in a three wire (phase, neutral, and protective earth) mains electric installation.

PLC modems are at least semi-stationary. Because of this and because a wired transmission medium is able to provide constant channel conditions, the channel characteristic between two PLC modems 1-1, 1-2 is relatively constant. However, there is a relatively small number of defined channel states, which are defined by the network topology. For example, switching of light changes the network topology. To the switched on light corresponds a first timely constant channel state and, therefore, a first channel matrix $\mathbf{H}$ and first precoding matrix $\mathbf{V}.$ To the switched off light corresponds a second timely constant channel state and, therefore, a second channel matrix $\mathbf{H}$ and second precoding matrix $\mathbf{V}.$

Therefore, the link controller 4-2 is advantageously adapted to generate at least some of the stored precoding matrices based on channel state information, for example, by calculating a SVD of a determined channel matrix $\mathbf{H}$ (i.e. at least some of the stored precoding matrices are generated by the receiver 1-2 before they are stored). These self generated precoding matrices may be stored with a high numerical exactitude (higher than prestored precoding matrices, if any) in order to be close to the ideal (i.e. calculated) precoding matrix. Whenever, the receiver 1-2 determines new channel conditions corresponding to a new precoding matrix, the newly generated and stored precoding matrix is transmitted also to the transmitter 1-1 (e.g. via the transmitting unit 2-2 and the receiving unit 3-1).

Further, the link controller 4-2 may generate a surrounding of the newly calculated and stored channel matrix in order to cope with small channel variations around the determined channel state. A surrounding is a set of precoding matrixes that is close to the newly calculated and stored precoding matrix. Closeness may be determined by the chordal distance criterion (see equation 4) for example. Hereby, a fine quantization of the space of precoding matrices may be used. That is, the precoding matrices of a surrounding are closer to each other than the prestored precoding matrices (if any). The surrounding does not have to be actually transmitted, since generation of the surrounding may be performed by both link controllers 4-2, 4-1 based on the newly generated and stored precoding matrix and based on the same surrounding generation rules. In order to keep the codebook size within a certain limit, the oldest self generated entries may be replaced by newly calculated precoding matrices when the limit is reached.

Thus, it is proposed to have a space of precoding matrices (the precoding matrices are seen as mathematical objects that are elements of a mathematical space that has density criterion defined) that is filled with precoding matrices in a non-uniform way. The density of precoding matrices is higher in a region around self generated channel matrices than elsewhere. The density criterion may be based, for example, on the chordal distance.

Self generation provides a better quantization in the sense that a stored precoding matrix can be found that is closer to the perfect precoding matrix. This results in a better SNR and a higher data rate. This better quantization is obtained without enlarging the codebook unduly. In fact, the codebook size can be even reduced due to the non-uniformity of the precoding matrix density. A smaller codebook size reduces the computation complexity of precoding matrix selection. Self generation may not only be applied to PLC systems but also to other communication systems having similar characteristics (approximate semi-stationarity and/or non-uniform precoding matrix density).

Despite having explained the present invention with relation to the OFDM multi-carrier modulation scheme, the present invention can also be employed with other multi-carrier modulation schemes (e.g. wavelet multi-carrier modulation) and can also be employed with non-multi-carrier modulation schemes.

**Claims**

1. A multiple input multiple output, MIMO, communication device (1-2) comprising
   a memory (4-2) for storing a plurality of MIMO precoding matrices realizing the transmission side encoding of an Eigenbeamforming system;
   a controller (4-2) for calculating, for each of at least some of the stored precoding matrices, an indicator value of the signal-to-noise-ratio, SNR, of at least one decoupled transmission channel based on at least part of the corresponding precoding matrix, and for selecting one of said stored precoding matrices based on said calculated at least one indicator value of the SNR; and
   a MIMO detector for detecting symbols based on said selected precoding matrix.

2. A communication device (1-2) according to claim 1 wherein said selected precoding matrix is the precoding matrix corresponding to the indicator value of the SNR which indicates the highest SNR.

3. A communication device (1-2) according to claim 1, wherein said controller (4-2) is adapted to calculate, for each of said at least some of the stored precoding matrices, an average value of said calculated indicator values of the SNR and wherein the selected precoding matrix is the precoding matrix corresponding to an extremal value of the calculated average values.

4. A communication device (1-2) according to claim 1, 2 or 3, whereby said communication device (1-2) is an adaptive OFDM communication device and said controller (4-2) is adapted to determine a modulation scheme of at least one OFDM subcarrier according to channel conditions of the respective subcarrier.

5. A communication device (1-2) according to any one of the claims 1 to 4 wherein
   said MIMO detector is adapted to detect said symbols based on a detection matrix, said detection matrix being based on said selected precoding matrix, each column or row of the detection matrix corresponding to a different decoupled transmission channel;
   said controller (4-2) is adapted to calculate at least one row or column of a detection matrix for each of said at least some of the stored precoding matrices, said at least one row or column corresponding to said at least one decoupled transmission channel; and
   the calculation of said indicator value of the SNR of a decoupled transmission channel is based on the corresponding row or column of the corresponding detection matrix.

6. A communication device (1-2) according to claim 5 wherein said indicator value of the SNR of a decoupled transmission channel is based on or given by a norm of the corresponding row or column of the corresponding detection matrix.

7. A communication device (1-2) according to claim 5 or 6 wherein said link controller (4-2) is adapted to calculate all rows or columns of a detection matrix for each of said at least some of the stored precoding matrices and to calculate corresponding indicator values of the SNR of each of the decoupled transmission channels.

8. A communication device (1-2) according to any one of the claims 1 to 7 wherein said link controller (4-2) is adapted to generate and store at least some of said stored precoding matrices based on channel state information.

9. A method of operating a multiple input multiple output, MIMO, communication device having stored a plurality of MIMO precoding matrices realizing the transmission side encoding of an Eigenbeamforming system, the method comprising steps of
calculating (S8), for each of at least some of the stored precoding matrices, an indicator value of the signal-to-noise-ratio, SNR, of at least one decoupled transmission channel based on at least part of the corresponding precoding matrix;
selecting (S10) one of said stored precoding matrices based on the calculated at least one indicator value of the SNR; and
detecting (S18) symbols based on said selected precoding matrix.

10. A method according to claim 9 wherein said selected precoding matrix is the precoding matrix corresponding to the indicator value of the SNR which indicates the highest SNR.

11. A method according to claim 9 wherein, for each of said at least some of the stored precoding matrices, an average value of said calculated indicator values of the SNR is calculated and wherein the selected precoding matrix is the precoding matrix corresponding to an extremal value of the calculated average values.

12. A method according to claim 9, 10 or 11 wherein said MIMO communication device is an adaptive OFDM communication device and the method further comprises a step of
determining a modulation scheme of at least one OFDM subcarrier according to channel conditions of the respective subcarrier.

13. A method according to any one of the claims 9 to 12 wherein
said step (S18) of detecting symbols is based on a detection matrix, said detection matrix being based on said selected precoding matrix, each column or row of the detection matrix corresponding to a different decoupled transmission channel;
the method further comprising
calculating (S6) at least one row or column of a detection matrix for each of said at least some of the stored precoding matrices, said at least one row or column corresponding to said at least one decoupled transmission channel; whereby
said step (S8) of calculating an indicator value of the SNR of a decoupled transmission channel is based on the corresponding row or column of the corresponding detection matrix.

14. A method according to claim 13 wherein said indicator value of the SNR of a decoupled transmission channel is based on or given by a norm of the corresponding row or column of the corresponding detection matrix.

15. A method according to claim 13 or 14 wherein
all rows or columns of a detection matrix are calculated in said step (S6) of calculating at least one row or column of a detection matrix and wherein
an indicator value of the SNR is calculated for each of the decoupled transmission channels in said step (S8) of calculating an indicator value of the SNR of at least one decoupled transmission channel.

16. A method according to any one of the claims 9 to 15 comprising a step of generating and storing at least some of said stored precoding matrices based on channel state information.

**17.** A software program product that, when executed by one or more information processing devices, is adapted to carry out the method according to any one of the above claims 9 to 16.

Fig. 1

Fig. 2

EP 2 073 471 A1

S2 —— determine
channel state information

↓

S4 —— calculate
pseudo inverse

↓

S6 —— calculate
detection matrices
based on precoding matrices

↓

S8 —— calculate
norm of rows of detection matrices

↓

S10 —— select precoding matrix
based on calculated norms

↓

S18 —— detect symbols
based on selected precoding matrix

calculate indicator
of overall SNR —— S12

↓

select precoding matrix
corresponding to
highest overall SNR —— S14

—— S10

select precoding matrix
corresponding to highest
SNR on any decoupled channel —— S16

—— S10

Fig. 3

Europäisches
Patentamt

European
Patent Office

Office européen
des brevets

**EUROPEAN SEARCH REPORT**

Application Number

EP 07 12 3863

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SENHUA HUANG ET AL: "A Novel Receiver Aided Beamforming Technique" IEEE INTERNATIONAL SYMPOSIUM ON PERSONAL, INDOOR AND MOBILE RADIO COMMUNICATIONS., vol. 4, 11 September 2005 (2005-09-11), pages 2447-2451, XP010928130 PISCATAWAY, NJ, USA, IEEE ISBN: 978-978-38007-2-4 * abstract; figure 3 * sections I, III ----- | 1,2,9, 10,17 | INV. H04L25/03 H04B7/06 ADD. H04B7/04 |
| X | US 2007/281746 A1 (TAKANO TAKESHI [JP] ET AL) 6 December 2007 (2007-12-06) * figures 1,6 * * paragraph [0005] * * paragraph [0015] - paragraph [0016] * * paragraph [0041] - paragraph [0047] * * paragraph [0054] - paragraph [0060] * * paragraph [0071] - paragraph [0086] * * paragraph [0099] - paragraph [0122] * * paragraph [0124] - paragraph [0127] * * paragraph [0132] - paragraph [0133] * ----- | 1,2,9, 10,17 | |
| X | WO 2007/095102 A (INTERDIGITAL TECH CORP [US]; PAN JUNG-LIN [US]; GRIECO DONALD M [US];) 23 August 2007 (2007-08-23) * figures 5,6 * * paragraph [0025] - paragraph [0026] * * paragraph [0038] * * paragraph [0045] - paragraph [0050] * ----- -/-- | 1,2,9, 10,17 | TECHNICAL FIELDS SEARCHED (IPC) H04L H04B |

~~The present search report has been drawn up for all claims~~

| Place of search | Date of completion of the search | Examiner |
|---|---|---|
| The Hague | 1 December 2008 | Faber, Thomas |

EPO FORM 1503 03.82 (P04C01)

**Europäisches Patentamt**
**European Patent Office**
**Office européen des brevets**

## EUROPEAN SEARCH REPORT

Application Number

EP 07 12 3863

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/138555 A (QUALCOMM INC [US]; SAMPATH HEMANTH [US]; GORE DHANANJAY ASHOK [US]; GO) 28 December 2006 (2006-12-28)<br>* abstract; figures 1,5-8 *<br>* paragraph [0004] - paragraph [0007] *<br>* paragraph [0029] *<br>* paragraph [0039] - paragraph [0042] *<br>* paragraph [0051] *<br>* paragraph [0068] - paragraph [0083] *<br>* paragraph [0089] - paragraph [0100] *<br>* paragraph [0104] *<br>----- | 1-3, 9-11,17 | |
| X | US 2006/030364 A1 (OLESEN ROBERT LIND [US] ET AL) 9 February 2006 (2006-02-09)<br>* figures 3,6 *<br>* paragraph [0015] - paragraph [0019] *<br>* paragraph [0023] - paragraph [0026] *<br>* paragraph [0039] *<br>* paragraph [0049] - paragraph [0056] *<br>* paragraph [0060] - paragraph [0062] *<br>----- | 1,5-7,9, 13-15,17 | |
| X | US 2003/181170 A1 (SIM DONG HI [KR]) 25 September 2003 (2003-09-25)<br>* figures 5-8 *<br>* paragraph [0032] - paragraph [0042] *<br>* paragraph [0066] - paragraph [0067] *<br>----- | 1,5-7,9, 13-15,17 | TECHNICAL FIELDS SEARCHED (IPC) |
| X | WO 2006/029261 A (INTEL CORP [US]; LI QINGHUA [US]; LIN XINTIAN [US]) 16 March 2006 (2006-03-16)<br>* figure 3 *<br>* page 3, line 20 - page 5, line 10 *<br>* page 7, line 16 - page 8, line 27 *<br>----- | 1,5-7,9, 13-15,17 | |

~~The present search report has been drawn up for all claims~~

| Place of search | Date of completion of the search | Examiner |
|---|---|---|
| The Hague | 1 December 2008 | Faber, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

EP 07 12 3863

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☒ Only part of the further search fees have been paid within the fixed time limit. The present European search report has been drawn up for those parts of the European patent application which relate to the inventions in respect of which search fees have been paid, namely claims:

1-3,5-7,9-11,13-15,17

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

The Search Division considers that the present European patentapplication does not comply with the requirements of unity of invention and relates to severalinventions or groups of inventions, namely:

1. claims: 1-3, 9-11, 17

   Averaging indicator values of SNR and selecting MIMO precoding matrices based on an extremal value.
   ---

2. claims: 1, 4, 9, 12, 17

   Determining a modulation scheme in an adaptive OFDM communication.
   ---

3. claims: 1, 5-7, 9, 13-15, 17

   Calculating indicator values of SNR based on rows or columns of corresponding detection matrix.
   ---

4. claims: 1, 8, 9, 16, 17

   Self generated precoding matrices for PLC modems.
   ---

**ANNEX TO THE EUROPEAN SEARCH REPORT
ON EUROPEAN PATENT APPLICATION NO.**

EP 07 12 3863

This annex lists the patent family members relating to the patent documents cited in the above-mentioned European search report.
The members are as contained in the European Patent Office EDP file on
The European Patent Office is in no way liable for these particulars which are merely given for the purpose of information.

01-12-2008

| Patent document cited in search report | | Publication date | Patent family member(s) | | Publication date |
|---|---|---|---|---|---|
| US 2007281746 | A1 | 06-12-2007 | CN | 101159464 A | 09-04-2008 |
| | | | EP | 1909406 A2 | 09-04-2008 |
| | | | JP | 2008092433 A | 17-04-2008 |
| | | | KR | 20080031615 A | 10-04-2008 |
| WO 2007095102 | A | 23-08-2007 | AR | 059420 A1 | 09-04-2008 |
| | | | AU | 2007215314 A1 | 23-08-2007 |
| | | | EP | 1994665 A1 | 26-11-2008 |
| WO 2006138555 | A | 28-12-2006 | CN | 101228713 A | 23-07-2008 |
| | | | EP | 1894319 A2 | 05-03-2008 |
| | | | KR | 20080016962 A | 22-02-2008 |
| US 2006030364 | A1 | 09-02-2006 | NONE | | |
| US 2003181170 | A1 | 25-09-2003 | AU | 2003215949 A1 | 08-10-2003 |
| | | | CN | 1643812 A | 20-07-2005 |
| | | | EP | 1490984 A1 | 29-12-2004 |
| | | | JP | 2005521327 T | 14-07-2005 |
| | | | WO | 03081803 A1 | 02-10-2003 |
| | | | KR | 20030075883 A | 26-09-2003 |
| WO 2006029261 | A | 16-03-2006 | TW | 285482 B | 11-08-2007 |
| | | | US | 2006092054 A1 | 04-05-2006 |

EPO FORM P0459

For more details about this annex : see Official Journal of the European Patent Office, No. 12/82